# EUROPÄISCHE PATENTSCHRIFT

(11) **EP 1 092 738 B1**
(45) Veröffentlichungstag und Bekanntmachung des Hinweises auf die Patenterteilung: **06.04.2005**
(21) Anmeldenummer: 00120245.6
(22) Anmeldetag: 27.09.2000
(51) Int. Cl.: C08G 18/66, C08G 18/08, C09D 175/06

(54) **Wasserverdünnbare Bindemittel für "Soft-Feel"-Lacke**
Waterdilutable binder for 'soft feel' lacquers
Liant diluable à l'eau pour laques souples à toucher

(30) Priorität: 15.10.1999 AT 173899
(43) Veröffentlichungstag der Anmeldung: 18.04.2001
(73) Patentinhaber: Surface Specialties Austria GmbH, 8402 Werndorf (AT)
(72) Erfinder: Schafheutle, Markus Dr., 8044 Graz (AT); Arzt, Anton, 8430 Neutillitsch (AT); Burkl, Julius, 8053 Graz (AT); Glettler, Martina, 8041 Graz (AT); Meisner, Ursula, 8041 Graz (AT); Petritsch, Gerlinde, 8054 Graz (AT); Wango, Jörg, 8142 Wundschuh (AT)
(74) Vertreter: Deckers, Hellmuth, Dr.

(56) Entgegenhaltungen:
- EP-A- 0 590 484
- EP-A- 0 669 352
- US-A- 4 791 168

## Beschreibung

Bei der Lackierung harter Substrate, beispielsweise von Kunststoffen, wird es häufig gewünscht, durch die Beschichtung einen weichen "Griff" zu erreichen, wobei die Oberfläche sich zwar weich (hautartig oder lederartig) anfühlt, die mechanische und chemische Beständigkeit der so hergestellten Beschichtungen jedoch im Vergleich zu den üblichen Beschichtungen nicht verschlechtert ist.

Die sogenannten "Soft-Feel"-Lacke lösen diese Aufgabe. Die damit beschichteten Substrate weisen Pendelhärten nach König von weniger als 20 Sekunden bei ca. 50 µm dicken Lackfilmen auf. Die Oberflächen sind kratzfest (Kratztest mit dem Fingernagel); soweit sich eine Kratzspur zeigt, ist sie durch einfaches Wischen mit der Fingerkuppe wieder zu entfernen. Ohne zu kleben, sind die Lackoberflächen rutschfest: beispielsweise rutscht ein Glas- oder Metallquader auf einer mit einem "Soft-Feel"-Lack beschichteten Oberfläche nicht ab, sondern kippt bei allmählicher Erhöhung des Neigungswinkels. Löst man einen Lackfilm von einer damit beschichteten Glasoberfläche und mißt dessen Dehnung, so ergibt sich einen reversible Dehnung von bis zu 500 % bei Messung bei Raumtemperatur mit einer Dehngeschwindigkeit von 0,6 cm/s.

Bindemittel für diese sogenannten "Soft-Feel"-Lacke sind vorzugsweise solche, die Segmente von Polymeren mit niedriger Glas-Übergangs-Temperatur aufweisen; die Vernetzungsdichte muß so hoch sein, daß die mechanischen und chemischen Beständigkeits-Eigenschaften sich möglichst wenig oder gar nicht verschlechtern; andererseits muß sie niedrig genug sein, um auch makroskopisch den Effekt der niedrigen Glas-Übergangs-Temperatur zur Geltung kommen zu lassen.

Es sind Zwei-Komponenten-Bindemittel für "Soft-Feel"-Lacke auf Basis von Hydroxylgruppen-haltigen Polyester-Urethanen bekannt, die bevorzugt mit Isocyanaten, aber auch z. B. mit Säureanhydriden oder Aminoplastharzen zu härten sind.

Bisher ist es noch nicht gelungen, brauchbare Ein-Komponenten-Bindemittel für "Soft-feel"-Lacke zur Verfügung zu stellen. Die Vernetzung mit Aminoplastharzen kann zwar bei erhöhter Temperatur im Sinne eines Ein-Komponenten-Systems ablaufen, jedoch wird die weiche Oberfläche des "Soft-Feel"-Lackes durch die hohen erforderlichen Temperaturen ungünstig beeinflußt. Insbesondere bei der Beschichtung von Kunststoffen ist die Vernetzungstemperatur durch die Erweichungstemperatur des Kunststoff-Substrats nach oben begrenzt.

In dem Dokument EP 0 669 352 A1 werden Beschichtungszusammeasetzungen für Soft-Feel-Lacke beschrieben, die bevorzugt mit Polyisocyanatvernetzern mit freien Isocyanatgruppen vernetzt werden. Als Hydroxylgruppen enthaltendes Bindemittel ist ein Polyester-Urethan enthalten, das aus im wesentlichen linearen Polyesterpolyolen a), weiteren Polyolen b), einer aus Hydroxycarbonsäuren, Aminocarbonsäuren, Aminosulfonsäuren und deren Salzen ausgewählten Säurekomponente c), gegebenenfalls einer niedermolekularen Hydroxyl- oder Aminogruppen enthaltenden Komponente d), gegebenenfalls einem hydrophilen ein- oder mehrwertigen Alkohol e), und einer Polyisocyanatkomponente f) gewonnen wird.

Diese bekannten bei Raumtemperatur härtenden Systeme auf Basis von Polyisocyanaten weisen die bei Isocyanaten üblichen Probleme auf: die begrenzte Topfzeit und die arbeitshygienische Bedenklichkeit. Ein weiterer wesentlicher Nachteil von Isocyanathärtern in Verbindung mit "Soft-Feel"-Lacken ist die dabei beobachtete "Nachhärtung". Die zur Vernetzung eingesetzten mehrfunktionellen Isocyanate werden üblicherweise im Überschuß eingesetzt. Sie können mit Wasser oder bereits der Luftfeuchtigkeit unter Decarboxylierung und Bildung der entsprechenden Amine reagieren, die wiederum mit noch unumgesetzten Isocyanaten Harnstoffe bilden. Diese Reaktion läuft während der Trocknung des Lackes ab und beeinträchtigt den unmittelbar nach dem Auftrag und der ersten Vernetzung noch weichen "Griff" der Lackschicht.

Es bestand daher das Bedürfnis, ein Bindemittel für "Soft-Feel"-Lacke zu entwickeln, das diesen weichen "Griff" dauerhaft behält. Eine weitere Aufgabe war, ein Einkomponenten-Bindemittel zur Verfügung zu stellen, das bereits bei moderater Temperatur härtet (ab 70 °C, vor allem von ca. 80 bis ca. 150 °C) und dennoch möglichst geringe Beschränkungen bei der Topfzeit ergibt. Diese Aufgabe wurde gelöst durch die Bereitstellung einer reaktiven Kombination aus einem Hydioxylgruppen-haltigen Polyester-Urethan und einem Melaminharz.

Die Erfindung betrifft daher ein wasserverdünnbares Bindemittel für "Soft-Feel"-Lacke, enthaltend
eine wäßrige Dispersion eines Hydroxylgruppen-haltigen Polyester-Urethans **A**, herstellbar durch Umsetzen eines Polyesters **A1** mit Hydroxylgruppen als funktionellen Gruppen, wobei der Polyester **A1** aus linearen, verzweigten oder cyclischen aliphatischen oder aromatischen zwei- oder mehrfunktionellen Carbonsäuren **A11** und aliphatischen linearen oder verzweigten zwei- oder mehrfunktionellen Alkoholen **A12** als Edukten aufgebaut ist, mit einem mehrfunktionellen Isocyanat **A2,** einer Verbindung **A3** mit mindestens einer gegenüber Isocyanaten reaktiven Hydroxyl-, Mercapto- oder Amino-Gruppe und mindestens einer Säuregruppe, die nicht oder nur in untergeordnetem Maße mit Isocyanaten reagiert, sowie optional mit einem trocknenden oder bevorzugt nichttrocknenden Öl **A4,**
eine wäßrige Lösung oder Dispersion eines Triazinharzes **B**, das pro einem Molekül abgeleitet von einem Triazin zwischen 2 und 6 Gruppen ausgewählt aus Methylen-Gruppen, Methylenäther-Gruppen, Methylol-Gruppen und Alkoxymethyl-Gruppen aufweist,
dadurch gekennzeichnet, daß die Glastemperatur des Polyester-Urethans **A** zwischen -70 und -20 °C, bevorzugt -60 bis - 25 °C, und insbesondere -50 bis - 30 °C, beträgt, und daß die Hydroxylzahl des Polyester-Urethans **A** 10 bis 120 mg/g, bevorzugt ca. 20 bis ca. 100, und insbesondere 25 bis 95 mg/g beträgt.

Soweit Kunststoffe, Textilien, Leder oder Holz mit den erfindungsgemäßen "Soft-Feel"-Lacken beschichtet werden sollen, ist es bevorzugt, solche Triazinharze einzusetzen, die vorwiegend N-Methylol-Gruppen enthalten. Diese reagieren schon bei relativ niedrigen Temperaturen ab ca. 80 °C mit dem Polyester-Urethan unter Vernetzung. Bei der Lackierung von Metallen oder Glas kann man auch die reaktionsträgeren verätherten Melaminharze, gegebenenfalls unter Zusatz der üblichen sauren Katalysatoren, einsetzen.

Untergeordnetes Maß bedeutet hier, daß bei ansonsten gleichen Reaktionsbedingungen die Reaktionsgeschwindigkeit der Isocyanat-reaktiven Hydroxyl-, Mercapto- oder Aminogruppen mindestens 5 mal so groß ist wie die der Säuregruppen gegenüber derselben Isocyanatgruppen-haltigen Verbindung.

Der Polyester **A1** wird bevorzugt in zwei Stufen auf bekannte Weise durch Kondensation der gesamten Menge der Carbonsäure-Komponente **A11** mit einem Teil **A121** der Polyol-Komponente **A12** hergestellt, wobei in der ersten Stufe die mittlere Funktionalität von **A121** zwischen 1,8 und 2,3, bevorzugt 1,9 bis 2,1, liegt.

Bevorzugt werden als Komponente **A11** Dicarbonsäuren mit 4 bis 40 Kohlenstoffatomen eingesetzt, wobei Bernsteinsäure, Adipinsäure, Hexahydrophthalsäure, Cyclohexandicarbonsäure, und ein durch Dimerisieren von Fettsäuren erhältliches Gemisch verzweigter aliphatischer Dicarbonsäuren besonders bevorzugt sind. Bis zu 10 %, bevorzugt bis zu 5 % der Masse von **A11** kann aus einer oder mehreren höheren Carbonsäuren mit drei oder mehr Carbonsäuregruppen pro Molekül wie Tri- und Tetracarbonsäuren bestehen.

Als Komponente **A121** werden bevorzugt zweiwertige Alkohole mit 2 bis 20 Kohlenstoffatomen eingesetzt. Geeignet sind Glykol, 1,2- und 1,3-Propandiol, 1,4-Butandiol, 1,6-Hexandiol, Cyclohexandimethanol und die Ätheralkohole Diäthylenglykol, Triäthylenglykol und höhere Oligomere bis zu einem Polymerisationsgrad von ca. 10. Auch oligomere Propylenglykole sind einsetzbar; der Massenanteil der Ätheralkohole in der Komponente **A121** beträgt bevorzugt bis zu 30 % der Masse der Komponente **A121**. Im Rahmen der Erfindung ist es möglich, als Bestandteile der Komponente **A121** auch drei- oder mehrfunktionelle Alkohole und monofunktionelle Alkohole jeweils einzeln oder gemeinsam einzusetzen. Dabei muß die Menge dieser höher- oder niedriger-funktionellen Alkohole so gewählt werden, daß die mittlere Funktionalität der obigen Bedingung genügt.

Nach der Kondensation der bevorzugt difunktionellen Edukte der ersten Stufe wird der erhaltene Polyester, der typischerweise eine Säurezahl von unter 10 mg/g, bevorzugt unter 5 mg/g aufweist, mit einem tri- oder mehrfunktionellen aliphatischen Alkohol oder einem Gemisch aus mehreren aliphatischen linearen oder verzweigten Alkoholen mit einer mittleren Funktionalität von 2,2 bis 4,5, bevorzugt 2,5 bis 4,0 und insbesondere 2,8 bis 3,8, gemeinsam nachfolgend als **A122** bezeichnet, umgeestert. Die Komponente **A122** umfaßt bevorzugt dreiwertige Alkohole wie Glycerin, Trimethylolpropan und Trimethyloläthan, vierwertige Alkohole wie Pentaerythrit, Ditrimethyloläthan und -propan, die erfindungsgemäß bevorzugt im Gemisch mit zweiwertigen Alkoholen wie unter **A121** definiert, eingesetzt werden, und auch höherwertige Alkohole wie Mannit, Sorbit und Dipentaerythrit. Nach dem Umesterungsschritt sollte der resultierende verzweigte Polyester **A1** eine Hydroxylzahl von ca. 50 bis ca. 150 mg/g, bevorzugt 70 bis 130, und insbesondere 80 bis 120 mg/g und eine Säurezahl von weniger als 8, insbesondere weniger als 5 mg/g aufweisen.

Die mehrfunktionellen Isocyanate **A2** sind aliphatische oder aromatische Verbindungen mit (im Mittel, soweit Mischungen von zwei oder mehreren Verbindungen eingesetzt werden) zwei oder mehr als zwei Isocyanatgruppen pro Molekül. Unter den geeigneten aromatischen Diisocyanaten werden Toluylendiisocyanat (technische Isomerenmischung der 2,4- und der 2,6-Isomere) und Diphenylmethandiisocyanat genannt. Bevorzugt werden lineare, verzweigte und cyclische aliphatische Isocyanate, insbesondere difunktionelle Isocyanate, mit 2 bis 15 Kohlenstoffatomen in dem (cyclo)aliphatischen Rest. Aus den aromatischen Isocyanaten können auch bevorzugt solche eingesetzt werden, die Isocyanatgruppen an einem Kohlenstoffatom mit aliphatischem Charakter tragen; ein Beispiel dafür ist Tetramethylxylylendiisocyanat. Andere bevorzugte Isocyanate sind 1,6-Diisocyanatohexan, 1,6-Diisocyanato-3,3,5- und -3,5,5-trimethylhexan, 1,4-Diisocyanatocyclohexan, Isophorondiisocyanat, 2,2-Bis-(4-isocyanatocyclohexyl)propan, sowie die von diesen abgeleiteten Uretdione, Allophanate und Biurete.

Die Verbindungen **A3** weisen mindestens eine, bevorzugt zwei oder mehr, insbesondere zwei Gruppen auf, die mit Isocyanaten unter Addition zu Urethanen, Harnstoffen oder Thiocarbamaten reagieren, also Hydroxyl-, Amino- oder Mercaptogruppen. Als weitere funktionelle Gruppe tragen sie eine Säuregruppe, die selbst unter den gewählten Reaktionsbedingungen mit dem Isocyanat nicht oder nur wenig reagiert. Die Säuregruppen sind ausgewählt aus organisch gebundenen Carbon-, Sulfon- und Phosphonsäuregruppen. Bevorzugt ist die Säuregruppe durch benachbarte Substituenten sterisch abgeschirmt. Besonders bevorzugt sind Bis-hydroxymethylalkansäuren wie Dimethylolpropionsäure, Dimethylolbuttersäure und Dimethylolessigsäure.

Die Öle **A4** sind die bekannten Ester von Fettsäuren und Glycerin, wie Leinöl, Safloröl, bevorzugt werden nichttrocknende Öle, insbesondere auch solche, in denen mindestens ein Teil, bevorzugt mehr als 5 % der Masse, der Fettsäuren auch hydroxyfunktionell ist. Besonders bevorzugt wird Rizinusöl.

Bevorzugt hat das Polyester-Urethan **A** eine Säurezahl von ca. 10 bis ca. 60, besonders bevorzugt ca. 12 bis ca. 50, und insbesondere ca. 15 bis ca. 40 mg/g, und die Säuregruppen des Polyester-Urethans sind zu 20 bis 100 %, besonders bevorzugt 30 bis 90 %, insbesondere 40 bis 80 %, neutralisiert.

Die Hydroxylzahl ist gemäß DIN 53 240 definiert als der Quotient derjenigen Masse ***m*** _{KOH} an Kaliumhydroxid, die genausoviel Hydroxylgruppen aufweist wie eine zu untersuchende Probe, und der Masse ***m*** _{B} dieser Probe (Masse des Feststoffes in der Probe bei Lösungen oder Dispersionen); ihre übliche Einheit ist "mg/g".

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Als Komponente **B** werden teilverätherte oder vollständig verätherte Triazinharze eingesetzt, abgeleitet von Melamin, Aceto-, Caprino- und Benzoguanamin. Bevorzugt werden für wärmeempfindliche Substrate Melaminharze eingesetzt, bei denen die Anzahl der Methylolgruppen im Verhältnis zur Anzahl der zu Methylen-, Methylenäther oder Alkoxymethyl-Gruppen weiterkondensierten oder verätherten Gruppen ausreichend für die Reaktivität ist.

Als Methylol- oder N-Methylol-Gruppen werden Gruppen der Art >N-CH₂OH bezeichnet, als Methylen-Gruppen Gruppen der Art >N-CH₂-N<, als Methylenäther-Gruppen Gruppen der Art >N-CH₂-O-CH₂-N<, und als Alkoxymethyl-Gruppen Gruppen der Art >N-CH₂-O-R, wobei R üblicherweise eine Alkylrest ausgewählt aus Methyl-, Äthyl, n- und iso-Propyl sowie n-, iso-, sek.- und tert.-Butylgruppen bedeutet, und wobei Methyl- und die n- und iso-Butylgruppen bevorzugt werden.

Die Mengen der Komponenten **A** und **B** werden vorteilhaft so gewählt, daß das Verhältnis der Anzahl der Hydroxylgruppen in **A** zur Anzahl der reaktiven Gruppen in **B** 0,7:1 bis 1,5:1, bevorzugt 0,8:1 bis 1,4:1, und besonders bevorzugt 0,9:1 bis 1,3:1 beträgt.

Das erfindungsgemäße System härtet überraschenderweise schon ab ca. 80 °C, bevorzugt ab ca. 90 °C. Gegenüber den bekannten, mit mehrfunktionellen Isocyanaten härtbaren Systemen weisen die erfindungsgemäßen Systeme die folgenden Vorteile auf:

Bei ungefähr gleicher Härtungstemperatur (ab 80 °C) sind die erfindungsgemäßen Systeme schon nach kurzer Zeit (ca. 0,5 Stunden) Trocknen an der Luft staubtrocken; diese staubtrockene Schicht läßt sich sofort überlackieren, ohne daß es zu der von den mit Isocyanaten härtenden Systemen bekannten "Kocher-Bildung" kommt. Im Gegensatz zu den Isocyanaten wird von den Melaminharzen in Verbindung mit den Polyesterurethanen kein Überschuß eingesetzt, sondern es genügt eine stöchiometrische Menge (pro Hydroxylgruppe des Polyester-Urethan-Harzes eine Methylen-, Methylol- oder Alkoxymethyl-Gruppe) des Melaminharzes zur Härtung.

Bereits mit Schichtdicken ab ca. 30 µm läßt sich mit dem erfindungsgemäßen System ein weicher Griff erzielen; bei den bekannten Isocyanat-härtenden Systemen werden Schichtdicken von mindestens 50 µm benötigt. Im Gegensatz zu den bekannten mit Isocyanaten härtenden Systemen zeigen die erfindungsgemäßen Soft-Feel-Lacke nicht die Erscheinung der Nachhärtung; der weiche Griff verschwindet nicht allmählich, sondern bleibt auch nach langer Zeit noch erhalten.

Die Bindemittel gemäß der Erfindung sind hervorragend geeignet zur Formulierung von Lacken, die den damit beschichteten Substraten den oben beschriebenen weichen "Griff" verleihen. Insbesondere werden sie für die Beschichtung von Metallen, Kunststoffen, Glas, Keramik, Textilien, Leder und Holz eingesetzt.

### Beispiele

**1 Polyester**
   11 kg Diäthylenglykol, 18 kg 1,4-Butandiol, 16,4 kg Äthylenglykol und 72 kg Adipinsäure wurden gemischt und mit 0,13 kg Dibutylzinnoxid versetzt. Diese Mischung wurde innerhalb 6 Stunden auf 220 °C unter Rühren erhitzt und das entstehende Kondensatwasser wurde über eine Kolonne abdestilliert. Nachdem bei maximaler Guttemperatur die Kolonnenkopftemperatur sank, wurde bei 220 °C mit sinkendem Druck weiterdestilliert, bis die Säurezahl unter 2 mg/g gefallen war. Nach Messen der Hydroxylzahl wurde soviel Äthylenglykol zugegeben und damit bei 220 °C umgeestert, daß danach eine OH-Zahl von 48 bis 52 mg/g resultierte. Dies entspricht einer Viskosität des unverdünnten Harzes bei 23 °C von 10140 bis 11980 mPa·s. Anschließend wurden zu 98,39 kg dieses Präkondensats 3,5 kg Trimethylolpropan und 0,24 kg Äthylenglykol gegeben. Diese Mischung wurde eine weitere Stunde bei 220 °C gehalten. Man erhielt einen Polyester mit einer Säurezahl unter 3 mg/g und einer OH-Zahl von ca. 90 mg/g. (zahlenmittlere molare Masse Mₙ ca. 1250 g/mol)
**2 Polyurethandispersion**
   2.1 OH-funktionell in der Seitenkette
      102,2 kg (81,8 mol) des Polyesters aus Beispiel 1 wurden mit 7,3 kg (7,8 mol) Rizinusöl, 6,2 kg (46,2 mol) Dimethylolpropionsäure und 33 kg N-Methylpyrrolidon gemischt und bei 60 °C so lange gerührt, bis eine klare Lösung entstanden war. Dann wurde die Mischung mit 59 kg Methylisobutylketon verdünnt und bei 40 °C 34 kg (202,1 mol) Hexamethylendiisocyanat zugegeben. Bei dieser Temperatur wurde so lange gehalten, bis eine Isocyanatkonzentration (Massengehalt, bezogen auf die Masse des Festharzes) von 2,1 % erreicht war. War dieser Wert erreicht, wurde das Harz innerhalb 10 Minuten zu einer auf 80 °C erwärmten Lösung aus 3,3 kg (37,4 mol) Dimethyläthanolamin in 200 kg entionisiertem Wasser gegeben und eingerührt. Sofort danach wurde eine Lösung aus 5,1 kg (83,5 mol) Äthanolamin in 49 kg entionisiertem Wasser innerhalb 5 Minuten zu dieser Mischung zudosiert. Nach einer Nachrührphase von 30 Minuten wurde die Dispersion auf 50 °C gekühlt und unter sinkendem Druck das Methylisobutylketon abdestilliert. Man erhielt eine Polyurethandispersion mit einem Festkörper-Massenanteil (nichtflüchtigen Anteil) von 35 %, einem pH-Wert von etwa 7,7, einer Viskosität von ca. 570 mPa·s und einer Teilchengröße von etwa 110 bis 140 nm.
   2.2 flexibilisiert und OH-Funktionen am Kettenende
      102,2 kg des Polyesters aus Beispiel 1 wurden mit 7,3 kg Rizinusöl, 6,2 kg Dimethylolpropionsäure und 33 kg N-Methylpyrrolidon gemischt und bei 60 °C so lange gerührt, bis eine klare Lösung entstanden war. Dann wurde die Mischung mit 59 kg Methylisobutylketon verdünnt und bei 40 °C 34 kg Hexamethylendiisocyanat zugegeben. Bei dieser Temperatur wurde so lange gehalten, bis eine Isocyanatkonzentration (Masse an Isocyanatgruppen, bezogen auf Masse des Festharzes) von 2,1 % erreicht war. War dieser Wert erreicht, wurde das Harz innerhalb 10 Minuten zu einer auf 80 °C erwärmten Lösung aus 3,3 kg Dimethyläthanolamin in 249 kg entionisiertem Wasser gegeben und eingerührt. Sofort danach wurde eine Mischung aus 3,2 kg Diäthanolamin und 5,8 kg 2-Äthylhexylamin innerhalb 5 Minuten zu dieser Mischung zudosiert. Nach einer Nachrührphase von 30 Minuten wurde die Dispersion auf 50 °C gekühlt und unter sinkendem Druck das Methylisobutylketon abdestilliert. Man erhielt eine Polyurethandispersion mit einem Festkörper-Massenanteil (nichtflüchtigen Anteil) von 40 %, einem pH-Wert von etwa 7,7, einer Viskosität von ca. 850 mPa·s und einer Teilchengröße von etwa 130 bis 160 nm.
**3 "Soft-feel"-Lacke**
   3.1 Zu 286 g des Bindemittels aus Beispiel 2.1 wurden 5 g ®Additol VXL 6208 (Vianova Resins GmbH & Co. KG) und 3 g ®Entschäumer DNE (Bayer AG) gegeben und verrührt. Während des Rührens wurden 64 g entionisiertes Wasser langsam zugegeben. In diese homogene Mischung wurden 5 g ®Spezialschwarz 4 (Degussa-Hüls AG) zugegeben und auf der Perlmühle eingearbeitet. Nach 20 Minuten wurden 15 g ®TS100 (Degussa-Hüls AG) unter laufender Perlmühle sukzessive zugesetzt. Danach wurde noch weitere 10 Minuten dispergiert. Die Perlen wurden abgesiebt und unter dem Flügelrührer 3 g ®Byk 346 (Byk Chemie GmbH) und 1 g ®Entschäumer DNE eingearbeitet.
   3.2 Zu 250 g des Bindemittels aus Beispiel 2.2 wurden 5 g ®Additol VXL 6208 und 3 g ®Entschäumer DNE gegeben und verrührt. Während des Rührens wurden 100 g entionisiertes Wasser langsam zugegeben. In diese homogene Mischung wurden 5 g ®Spezialschwarz 4 zugegeben und auf der Perlmühle eingearbeitet. Nach 20 Minuten wurden 15 g ®TS100 unter laufender Perlmühle sukzessive zugesetzt. Danach wurde noch weitere 10 Minuten dispergiert. Die Perlen wurden abgesiebt und unter dem Flügelrührer 3 g ®Byk 346 und 1 g ®Entschäumer DNE eingearbeitet.
**4 Applikation**
   4.1 In 100 g dieser Lacke (3. 1 und 3.2) wurden 2,5 g der Melaminharze ®Cymel 385 (4.11 C und 4.12 C) bzw. ®Maprenal MF 920 (4.11 M bzw 4.12 M) eingerührt.
      Diese mit dem Härter versetzten Lacke wurden mit einem Aufziehwürfel mit einer Spaltbreite von 300 mm auf eine ABS-Platte aufgezogen. Nach 5 Minuten Ablüften bei Raumtemperatur wurde 30 Minuten bei 90 °C forciert getrocknet. Man erhielt "Soft-Feel"-Lacke mit angenehmer Haptik (Griff) und sehr guter Lösemittel- und Chemikalienbeständigkeit. Lacke gemäß 4.12 mit Bindemitteln gemäß Beispiel 2.2 sind im Griff etwas weicher und höher elastisch als solche gemäß 4.11 mit Bindemitteln gemäß Beispiel 2.1.
      Die Elongation eines gehärteten Films (auf Glasplatten aufgezogen und abgelöst, Naß-Schichtdicke ca. 300 µm) betrug bei Härtung bei 90 °C (4.11 C) über 400 %, bei Härtung bei ca. 150 °C (4.11 M) über 300 %.
   4.2 In 100 g der Lacke (3.1 und 3.2) wurden 5 g der Melaminharze ®Cymel 385 (4.21 C und 4.22 C) bzw. ®Maprenal MF 920 (4.21 M bzw 4.22 M) eingerührt.
      Diese mit dem Härter versetzten Lacke wurden mit einem Aufziehwürfel mit einer Spaltbreite von 300 mm auf eine ABS-Platte aufgezogen. Nach 5 Minuten Ablüften bei Raumtemperatur wurde 30 Minuten bei 90 °C forciert getrocknet. Man erhielt Softfeel-Lacke mit angenehmer Haptik und sehr guter Lösemittel- und Chemikalienbeständigkeit. Lacke gemäß 4.22 mit Bindemitteln gemäß Beispiel 2.2 sind im Griff etwas weicher und höher elastisch als solche gemäß 4.21 mit Bindemitteln gemäß Beispiel 2.1.

## Patentansprüche

1. Wasserverdünnbares Bindemittel für Soft-Feel-Lacke, enthaltend eine wäßrige Dispersion eines Hydroxylgruppen-haltigen Polyester-Urethans **A**, herstellbar durch Umsetzen eines Polyesters **A1** mit Hydroxylgruppen als funktionellen Gruppen, wobei der Polyester **A1** aus linearen, verzweigten oder cyclischen aliphatischen oder aromatischen zwei- oder mehrfunktionellen Carbonsäuren **A11** und aliphatischen linearen oder verzweigten zwei- oder mehrfunktionellen Alkoholen **A12** als Edukten aufgebaut ist, mit einem mehrfunktionellen Isocyanat **A2,** einer Verbindung **A3** mit mindestens einer gegenüber Isocyanaten reaktiven Hydroxyl-, Mercapto- oder Amino-Gruppe und mindestens einer Säuregruppe, die nicht oder nur in untergeordnetem Maße mit Isocyanaten reagiert, sowie mit einem trocknenden oder nichttrocknenden Öl **A4,** eine wäßrige Lösung oder Dispersion eines Triazinharzes **B**, das pro einem Molekül abgeleitet von einem Triazin zwischen 2 und 6 Gruppen ausgewählt aus Methylen-Gruppen, Methylenäther-Gruppen, Methylol-Gruppen und Alkoxymethyl-Gruppen aufweist, **dadurch gekennzeichnet, daß** die Glastemperatur des Polyester-Urethans **A** zwischen - 70 und - 20 °C beträgt, und daß die Hydroxylzahl des Polyester-Urethans **A** 10 bis 120 mg/g beträgt.

2. Wasserverdünnbares Bindemittel für Soft-Feel-Lacke nach Anspruch 1, **dadurch gekennzeichnet, daß** das Polyester-Urethan **A** eine Säurezahl von 10 bis 60 mg/g aufweist.

3. Wasserverdünnbares Bindemittel für Soft-Feel-Lacke nach Anspruch 1, **dadurch gekennzeichnet**, das als Komponente **A11** Dicarbonsäuren mit 4 bis 40 Kohlenstoffatomen eingesetzt werden.

4. Wasserverdünnbares Bindemittel für Soft-Feel-Lacke nach Anspruch 1, **dadurch gekennzeichnet, daß** bis zu 10 % der Masse der Komponente **A11** aus Carbonsäuren mit drei oder mehr Carbonsäuregruppen pro Molekül besteht.

5. Wasserverdünnbares Bindemittel für Soft-Feel-Lacke nach Anspruch 1, **dadurch gekennzeichnet, daß** der Polyester **A1** in zwei Stufen hergestellt wird, und daß in der ersten Stufe die gesamte Menge der Carbonsäurekomponente **A11** mit einem Teil **A121** der Komponente **A12** umgesetzt wird, wobei die mittlere Funktionalität der Komponente **A121** zwischen 1,8 und 2,3 liegt.

6. Wasserverdünnbares Bindemittel für Soft-Feel-Lacke nach Anspruch 5, **dadurch gekennzeichnet, daß** in der zweiten Stufe der in der ersten Stufe hergestellte Polyester mit einem tri- oder mehrfunktionellen aliphatischen Alkohol oder einem Gemisch aus mehreren aliphatischen linearen oder verzweigten Alkoholen mit einer mittleren Funktionalität von 2,2 bis 4,5 umgesetzt wird.

7. Wasserverdünnbares Bindemittel für Soft-Feel-Lacke nach Anspruch 1, **dadurch gekennzeichnet, daß** die Isocyanate **A2** ausgewählt werden aus aliphatischen linearen, verzweigten und cyclischen Diisocyanaten mit 2 bis 15 Kohlenstoffatomen in dem (cyclo)aliphatischen Rest.

8. Wasserverdünnbares Bindemittel für Soft-Feel-Lacke nach Anspruch 1, **dadurch gekennzeichnet, daß** als Verbindung **A3** Dimethylolbuttersäure, Dimethylolpropionsäure oder Dimethylolessigsäure eingesetzt werden.

9. Wasserverdünnbares Bindemittel für Soft-Feel-Lacke nach Anspruch 1, **dadurch gekennzeichnet, daß** als Öle **A4** Leinöl, Safloröl oder Rizinusöl eingesetzt werden.

10. Wasserverdünnbares Bindemittel für Soft-Feel-Lacke nach Anspruch 1, **dadurch gekennzeichnet, daß** als Triazinharze **B** Melaminharze mit einem Verhältnis der Summe der Anzahl der Methylen-, Methylenäther-, und Alkoxymethyl-Gruppen zur Summe der Anzahl der N-Methylol-, Methylen-, Methylenäther-, und Alkoxymethyl-Gruppen von 0, 1 bis 0.95 eingesetzt werden.

11. Soft-Feel-Lack, enthaltend ein Bindemittel gemäß Anspruch 1.

12. Verwendung von Soft-Feel-Lacken nach Anspruch 11 zur Beschichtung von Holz, Textilien, Leder, Metallen, Glas und Kunststoffen.

## Claims

1. A water dilutable binder for soft feel coating materials, comprising an aqueous dispersion of a hydroxyl-containing polyester-urethane **A**, prepar-able by reacting a polyester **A1** with hydroxyl groups as functional groups, said polyester **A1** having been synthesized from linear, branched or cyclic aliphatic or aromatic difunctional or polyfunctional carboxylic acids **A11** and aliphatic linear or branched difunctional or polyfunctional alcohols **A12** as reactants, with a polyfunctional isocyanate **A2**, a compound **A3** having at least one hydroxyl, mercapto or amino group which is reactive toward isocyanates and having at least one acid group which reacts only to a minor extent if at all with isocyanates, and also with a drying or nondrying oil **A4**, an aqueous solution or dispersion of a triazine resin **B** which for each molecule derived from a triazine has between 2 and 6 groups selected from methylene groups, methylene ether groups, methylol groups and alkoxymethyl groups, wherein the glass transition temperature of the polyester-urethane **A** is between -70 and -20°C, and wherein the hydroxyl number of the polyester-urethane **A** is from 10 to 120 mg/g.

2. The water dilutable binder for soft feel coating materials as claimed in claim 1, wherein the polyester-urethane **A** has an acid number of from 10 to 60 mg/g.

3. The water dilutable binder for soft feel coating materials as claimed in claim 1, wherein dicarboxylic acids having 4 to 40 carbon atoms are used as component **A11**.

4. The water dilutable binder for soft feel coating materials as claimed in claim 1, wherein up to 10% of the mass of component **A11** comprises carboxylic acids having three or more carboxylic acid groups per molecule.

5. The water dilutable binder for soft feel coating materials as claimed in claim 1, wherein the polyester **A1** is prepared in two stages and wherein in the first stage the entirety of the carboxylic acid component **A11** is reacted with a portion **A121** of component **A12**, the average functionality of component **A121** being between 1.8 and 2.3.

6. The water dilutable binder for soft feel coating materials as claimed in claim 5, wherein in the second stage the polyester prepared in the first stage is reacted with a trifunctional or higher polyfunctional aliphatic alcohol or with a mixture of two or more aliphatic linear or branched alcohols having an average functionality of from 2.2 to 4.5.

7. The water dilutable binder for soft feel coating materials as claimed in claim 1, wherein the isocyanates **A2** are selected from aliphatic linear, branched and cyclic diisocyanates having 2 to 15 carbon atoms in the (cyclo)aliphatic radical.

8. The water dilutable binder for soft feel coating materials as claimed in claim 1, wherein dimethylolbutyric, dimethylolpropionic or dimethylolacetic acid is used as compound **A3**.

9. The water dilutable binder for soft feel coating materials as claimed in claim 1, wherein linseed oil, safflower oil or castor oil is used as oil **A4**.

10. The water dilutable binder for soft feel coating materials as claimed in claim 1, wherein melamine resins having a ratio of the sum of the number of methylene, methylene ether and alkoxymethyl groups to the sum of the number of N-methylol, methylene, methylene ether and alkoxymethyl groups of from 0.1 to 0.95 are used as triazine resins **B**.

11. A soft feel coating material comprising a binder as claimed in claim 1.

12. The use of a soft feel coating material as claimed in claim 11 to coat wood, textiles, leather, metals, glass, and plastics.

## Revendications

1. Liant diluable à l'eau pour peintures Soft-Feel (à toucher doux), contenant une dispersion aqueuse d'un polyester-uréthanne A contenant des groupes hydroxyle, pouvant être préparé par réaction d'un polyester A1 avec des groupes hydroxyle en tant que groupes fonctionnels, où le polyester A1 est obtenu à partir des matières de départ que sont des acides dicarboxyliques ou polycarboxyliques A11, aliphatiques ou aromatiques, à chaîne droite ou ramifiée, ou cycliques; et les dialcools ou polyalcools A12 aliphatiques à chaîne droite ou ramifiée, avec un polyisocyanate A2, un composé A3 comportant au moins un groupe hydroxyle, mercapto ou amino réactif vis-à-vis des isocyanates, et au moins un groupe acide qui ne réagit pas, ou seulement dans une moindre mesure, avec des isocyanates, et aussi avec une huile siccative ou non siccative A4, une solution ou dispersion aqueuse d'une résine triazinique B qui par molécule dérivant d'une triazine comprend de 2 à 6 groupes choisis parmi les groupes méthylène, les groupes méthylène-éther, les groupes méthylol et les groupes alcoxyméthyle, **caractérisé en ce que** la température de transition vitreuse du polyester-uréthanne A est de -70 à -20°C, et que l'indice d'hydroxyle du polyester-uréthanne A est de 10 à 120 mg/g.

2. Liant diluable à l'eau pour peintures Soft-Feel selon la revendication 1, **caractérisé en ce que** le polyester-uréthanne A a un indice d'acide de 10 à 60 mg/g.

3. Liant diluable à l'eau pour peintures Soft-Feel selon la revendication 1, **caractérisé en ce qu'**on utilise en tant que composant A11 des acides dicarboxyliques ayant de 4 à 40 atomes de carbone.

4. Liant diluable à l'eau pour peintures Soft-Feel selon la revendication 1, **caractérisé en ce que** jusqu'à 10 % de la masse du composant A11 sont constitués d'acides carboxyliques ayant au moins trois groupes acide carboxylique par molécule.

5. Liant diluable à l'eau pour peintures Soft-Feel selon la revendication 1, **caractérisé en ce que** le polyester A1 est préparé en deux étapes, et que dans la première étape on fait réagir la totalité du composant acide carboxylique A11 avec une partie A121 du composant A12, la fonctionnalité moyenne du composant A121 étant comprise entre 1,8 et 2,3.

6. Liant diluable à l'eau pour peintures Soft-Feel selon la revendication 5, **caractérisé en ce que** dans la deuxième étape le polyester préparé dans la première étape est mis à réagir avec un alcool aliphatique au moins trifonctionnel ou un mélange de plusieurs alcools aliphatiques à chaîne droite ou ramifiée et ayant une fonctionnalité moyenne de 2,2 à 4,5.

7. Liant diluable à l'eau pour peintures Soft-Feel selon la revendication 1, **caractérisé en ce que** les isocyanates A2 sont choisis parmi les diisocyanates aliphatiques à chaîne droite ou ramifiée, ou cycliques, ayant de 2 à 15 atomes de carbone dans le fragment (cyclo)aliphatique.

8. Liant diluable à l'eau pour peintures Soft-Feel selon la revendication 1, **caractérisé en ce qu'**on utilise en tant que composé A3 l'acide diméthylolbutyrique, l'acide diméthylolpropionique ou l'acide diméthylolacétique.

9. Liant diluable à l'eau pour peintures Soft-Feel selon la revendication 1, **caractérisé en ce qu'**on utilise en tant qu'huiles A4 l'huile de lin, l'huile de carthame ou l'huile de ricin.

10. Liant diluable à l'eau pour peintures Soft-Feel selon la revendication 1, **caractérisé en ce qu'**on utilise en tant que résines triaziniques B des résines de mélamine présentant un rapport de 0,1 à 0,95 entre le nombre total des groupes méthylène, méthylène-éther et alcoxyméthyle, et le nombre total des groupes N-méthylol, méthylène, méthylène-éther et alcoxyméthyle.

11. Peinture Soft-Feel contenant un liant selon la revendication 1.

12. Utilisation de peintures Soft-Feel selon la revendication 11 pour revêtir du bois, des textiles, du cuir, des métaux, du verre et des matières plastiques.
